# EUROPEAN PATENT APPLICATION

(11) **EP 4 443 869 A1**
(43) Date of publication of application: **09.10.2024**
(21) Application number: 24167261.7
(22) Date of filing: 28.03.2024
(51) Int. Cl.: H04N 13/117, H04N 13/128, H04N 13/239, H04N 25/40

(54) **FOVEAL REGION PROCESSING FOR ARTIFICIAL REALITY DEVICES**

(30) Priority: 05.04.2023 US 202363494421 P; 12.03.2024 US 202418602034
(71) Applicant: Meta Platforms Technologies, LLC, Menlo Park, CA 94025 (US)
(72) Inventor: Brailovskiy, Ilya, Menlo Park, 94025 (US); Sztuk, Sebastian, Menlo Park, 94025 (US); Linde, Oskar, Menlo Park, 94025 (US); Maskit, Daniel, Menlo Park, 94025 (US); Gupta, Devraj, Menlo Park, 94025 (US); Liang, Zheng, Menlo Park, 94025 (US); Xiao, Rui, Menlo Park, 94025 (US); King, Gary, Menlo Park, 94025 (US)
(74) Representative: Murgitroyd & Company

(57) **Abstract**

A computing system may determine a gaze of a user of the computing system. The computing system may generate a foveated map based on the gaze to determine a sensor readout for an image sensor of the computing system. The foveated map may include several foveal regions. The computing system may determine the sensor readout including several zones corresponding to the image sensor based on the several foveal regions. Each of the several zones may indicate a readout resolution for an area of the image sensor for the respective zone. The computing system may capture a first image using the image sensor. The computing system may generate a modified first image based on the captured first image and the sensor readout.

## Description

### TECHNICAL FIELD

This disclosure generally relates to computer graphics and 3D reconstruction techniques.

### BACKGROUND

Artificial reality is a form of reality that has been adjusted in some manner before presentation to a user, which may include, e.g., a virtual reality (VR), an augmented reality (AR), a mixed reality (MR), a hybrid reality, or some combination and/or derivatives thereof. Artificial reality content may include completely generated content or generated content combined with captured content (e.g., real-world photographs). The artificial reality content may include video, audio, haptic feedback, or some combination thereof, any of which may be presented in a single channel or in multiple channels (such as stereo video that produces a three-dimensional effect to the viewer). Artificial reality may be associated with applications, products, accessories, services, or some combination thereof, that are, e.g., used to create content in artificial reality and/or used in (e.g., perform activities in) an artificial reality.

Artificial reality systems that provide artificial reality content may be implemented on various platforms, including a head-mounted device (HMD) connected to a host computer system, a standalone HMD, a mobile device or computing system, or any other hardware platform capable of providing artificial reality content to one or more viewers. When a user is wearing an HMD, his vision of the physical environment is occluded by the physical structure of the HMD. For example, the displays of the HMD could be positioned directly in front of and in close proximity to the user's eyes. Thus, whenever the user needs to see his physical surroundings, he would need to remove the HMD. Even if the removal of the HMD is temporary, doing so is inconvenient and disruptive to the user experience.

### SUMMARY

According to a first aspect, there is provided a method comprising, by a computing system: determining a gaze of a user of the computing system; generating a foveated map based on the gaze to determine a sensor readout for an image sensor of the computing system, wherein the foveated map comprises a plurality of foveal regions; determining the sensor readout comprising a plurality of zones corresponding to the image sensor based on the plurality of foveal regions, and wherein each of the plurality of zones indicates a readout resolution for an area of the image sensor for the respective zone; capturing a first image using the image sensor; and generating a modified first image based on the captured first image and the sensor readout.

The plurality of foveal regions may comprise one or more of a central foveal region, a mid foveal region, or an outer foveal region.

The plurality of zones may comprise one or more of a first zone corresponding to the central foveal region, a second zone corresponding to the mid foveal region, or a third zone corresponding to the outer foveal region.

Each of the plurality of zones may further indicate a field-of-view (FOV) for the image sensor for the respective zone.

A first zone of the plurality of zones may indicate a first readout resolution for a first area of the image sensor and a second zone of the plurality of zones indicates a second readout resolution of a second area of the image sensor. The first readout resolution may be a higher resolution than the second readout resolution.

The first area may overlap the second area.

The method may further comprise blending, using an image signal processor of the computing system, a first sensor readout corresponding to a first zone of the plurality of zones and a second sensor readout corresponding to a second zone of the plurality of zones.

The method may further comprise omitting one or more areas corresponding to one or more zones of the plurality of zones to be readout in the sensor readout.

A first zone of the plurality of zones may be associated with a first frame rate and a second zone of the plurality of zones may be associated with a second frame rate.

The method may further comprise: determining an updated gaze of the user of the computing system; and generating an updated foveated map based on the updated gaze. The updated foveated map may comprise a plurality of updated foveal regions.

The method may further comprise: determining an updated sensor readout comprising a plurality of updated zones corresponding to the image sensor based on the plurality of updated foveal regions; capturing a second image using the image sensor; and generating a modified second image based on the captured second image and the updated sensor readout.

The method may further comprise performing, using an image signal processor of the computing system, noise reduction. A first noise reduction algorithm may be used for a first zone of the plurality of zones and a second noise reduction algorithm may be used for a second zone of the plurality of zones.

The method may further comprise: performing depth processing using a depth map of a scene captured by the first image to determine a mapping; and warping a first sensor readout corresponding to a first zone of the plurality of zones based on the mapping.

The method may further comprise: determining an inpainting algorithm based on a zone of the plurality of zones; and performing a first inpainting algorithm on the warped first sensor readout based on the first zone.

The method may further comprise rendering one or more virtual objects in the modified first image based on the sensor readout.

The modified first image may comprise a first image section corresponding to a first sensor readout of a first zone of the plurality of zones. A second image section may correspond to a second sensor readout of a second zone of the plurality of zones. A third image section may correspond to a third sensor readout of a third zone of the plurality of zones.

The method may further comprise applying one or more super-resolution techniques to make the readout resolution of each zone of the plurality of zones equal.

The method may further comprise adjusting a brightness level of the modified first image based on the foveated map.

According to a second aspect, there is provided one or more computer-readable storage media embodying software that is operable when executed to carry out the method of the first aspect. The media may be non-transitory.

According to a third aspect, there is provided a system comprising: one or more processors; and one or more computer-readable storage media coupled to one or more of the processors and comprising instructions operable when executed by one or more of the processors to cause the system to carry out the method of the first aspect. The media may be non-transitory.

According to a fourth aspect, there is provided a computer program product comprising instructions which, when the program is executed by a computer, cause the computer to carry out the method of the first aspect.

"Passthrough" is a feature that allows a user wearing an HMD to see his physical surroundings by displaying visual information captured by the HMD's front-facing cameras. To account for misalignment between the stereo cameras and the user's eyes and to provide parallax, the passthrough images are re-rendered based on a 3D model representation of the physical surrounding. The 3D model provides the rendering system geometry information, and the images captured by the HMD's cameras are used as texture images.

In particular examples, a computing system may perform foveated region processing as described herein. In particular examples, the computing system may be embodied as an artificial reality device, such as one of an AR device, a VR device, MR device, or a hybrid reality device, or some combination and/or derivatives thereof. Current artificial reality devices may need to achieve a high resolution (e.g., 12 Mpxs, 16 Mpxs, etc.). However, to do so a large amount of data would need to be captured and processed, which may be too much for an artificial reality device. As an example and not by way of limitation, an artificial reality headset may not have the physical resources (e.g., power, memory, etc.) to handle the capture and processing of the data. To reduce the amount of data that is being captured and processed and to reduce the power consumed in processing the data, a foveal map may be used to guide the sensor readout resolution of an image sensor capture. As an example and not by way of limitation, an artificial reality device may have front facing cameras that may capture the surrounding environment. A foveal map may be used to determine the sensor readout resolution of the front facing cameras. In particular examples, a full image utilizing the full sensor readout resolution may be sent to an image signal processing (ISP) to perform foveation region downsampling. The reduction of the amount of data may help to improve functions of an artificial reality device, such as a passthrough function.

In particular examples, to generate a foveal map, the artificial reality device may perform eye-tracking for each eye. As an example and not by way of limitation, the artificial reality device may use cameras or another sensor to perform eye-tracking. The artificial reality device may use an image signal processing (ISP) to process the captured signals from cameras capturing the surrounding environment. The foveal map may be used to guide the sensor readout resolution for the cameras. As an example and not by way of limitation, the foveal map may specify various foveal regions, such as central foveal region, mid foveal region, outer foveal region, etc. The sensor readout resolution may be different for each region. For instance, the readout resolution for the central foveal region may be 1:1 resolution, whereas the mid foveal region may be a 2:1 sub-sampled readout resolution. The foveal map may also specify or be associated with zones of an image that would correspond to different sensor readout resolutions as well. The foveal map zones may be based on the central foveal region, mid foveal region, outer foveal region, etc. While this disclosure describes a number of foveal regions and corresponding zones, this disclosure contemplates any number of foveal regions or zones being used as described herein. Each zone may have a unique field-of-view (FOV) and resolution. The size of each zone can change dynamically from frame-to-frame. The images of the different zones may overlap. As an example and not by way of limitation, a zone 3 image which may have a lower resolution (e.g., 4:1 sub-sampled resolution, etc.) may be a full image and a zone 2 image may have a slightly higher resolution (e.g., 2:1 sub-sampled resolution) may be stacked on top of the zone 3 image based on the foveal map.

In particular examples, the artificial reality device may use an ISP to blend the images between the different zones. In particular examples, the readout for some zones could be completely omitted, which would result in different framerates per zone. The artificial reality device may use an ISP to perform noise reduction (NR). For each zone, the artificial reality device may apply a different noise reduction algorithm. As an example and not by way of limitation, zone 1 may use the best noise reduction algorithm and zone 3 may use another noise reduction algorithm. For instances where there are separate monochromatic and RGB cameras, the artificial reality device may use an ISP to perform chroma and luma fusion. The artificial reality device may also perform depth processing and use a depth map of a scene to warp the image of each zone to the perspective of the user's eye. All of the zones may be treated similarly to process the depth. In particular examples, the artificial reality device may use the foveal map to perform depth processing. In particular examples, the artificial reality device may use a metadata of the captured images of the various zones to render the output image.

In particular examples, there would be missing image data that may need inpainting after warping the images of each zone to the perspective of the user's eye. The artificial reality device may perform machine-leaming (ML) based inpainting. Different in-painting algorithms may be applied to different zones. As an example and not by way of limitation, the artificial reality device may use ML-based inpainting for the image of zone 1 and the artificial reality device may use a combination of blending/averaging for the image of zone 2.

In particular examples, after inpainting is performed for each image of each zones, the artificial reality device may render virtual objects that are mixed in with the images of the different zones. The virtual object rendering may use foveated rendering as well. The artificial reality device may use super-resolution techniques to make the resolutions of the different zones equal so that they can be combined (e.g., blending, averaging, etc.). The type of super-resolution algorithm used can be different for each zone. In some embodiments, super-resolution is used to enhance the foveal region only. In addition, the latest eye-tracking data (which may be different from the eye-tracking data to determine the foveal map) may be used to guide the type of super-resolution algorithms used. As an example and not by way of limitation, if the latest eye-tracking data shows that the user is likely looking at zone 2, the super resolution algorithm used for zone 2 may be upgraded. After super resolution techniques are applied to the images of the different zones, the images may be combined to form a single output image. In particular examples, the image corresponding to periphery regions (e.g., outer zones) may be upscaled. The boundaries of the images of the different zones may be blurred. As an example and not by way of limitation, a gaussian filter may be used to blur the boundaries of the images of the different zones. In particular examples, the images of the different zones (without being upscaled) may be directly presented and may be upscaled by the display. The output image may also be time-warped to adjust for further changes to the user's head pose. The artificial reality device may present the final image to the user through the displays of the artificial reality device. The artificial reality device may further adjust the brightness levels and the like based on where the user is viewing.

The embodiments disclosed herein are only examples, and the scope of this disclosure is not limited to them. Particular embodiments may include all, some, or none of the components, elements, features, functions, operations, or steps of the embodiments disclosed herein. Embodiments according to the invention are in particular disclosed in the attached claims directed to a method, a storage medium, a system, and a computer program product, wherein any feature mentioned in one claim category, e.g., method, can be claimed in another claim category, e.g., system, as well. The dependencies or references back in the attached claims are chosen for formal reasons only. However, any subject matter resulting from a deliberate reference back to any previous claims (in particular multiple dependencies) can be claimed as well, so that any combination of claims and the features thereof are disclosed and can be claimed regardless of the dependencies chosen in the attached claims. The subject-matter which can be claimed comprises not only the combinations of features as set out in the attached claims but also any other combination of features in the claims, wherein each feature mentioned in the claims can be combined with any other feature or combination of other features in the claims. Furthermore, any of the embodiments and features described or depicted herein can be claimed in a separate claim and/or in any combination with any embodiment or feature described or depicted herein or with any of the features of the attached claims.

### BRIEF DESCRIPTION OF THE DRAWINGS

Non-limiting and non-exhaustive examples of the invention are described with reference to the following figures, wherein like reference numerals refer to like parts throughout the various views unless otherwise specified.
FIG. 1A illustrates an example artificial reality system worn by a user.
FIG 1B illustrates an example of a passthrough feature.
FIGS. 2A and 2B illustrate example sensor readouts of an image sensor.
FIG. 3 illustrates an example image sectioned into a plurality of different zones.
FIG. 4A and 4B illustrate an example process of foveated region processing.
FIG. 5 illustrates another example process of foveated region processing.
FIG. 6 illustrates an example method for foveated region processing.
FIG. 7 illustrates an example network environment associated with an artificial reality or social-networking system.
FIG. 8 illustrates an example computer system.

### DETAILED DESCRIPTION

Examples of Foveal Region Processing are described herein. In the following description, numerous specific details are set forth to provide a thorough understanding of the examples. One skilled in the relevant art will recognize, however, that the techniques described herein can be practiced without one or more of the specific details, or with other methods, components, materials, etc. In other instances, well-known structures, materials, or operations are not shown or described in detail to avoid obscuring certain aspects.

Reference throughout this specification to "one embodiment" or "an embodiment" means that a particular feature, structure, or characteristic described in connection with the embodiment is included in at least one embodiment of the present invention. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

"Passthrough" is a feature that allows a user wearing an HMD to see his physical surroundings by displaying visual information captured by the HMD's front-facing cameras. To account for misalignment between the stereo cameras and the user's eyes and to provide parallax, the passthrough images are re-rendered based on a 3D model representation of the physical surrounding. The 3D model provides the rendering system geometry information, and the images captured by the HMD's cameras are used as texture images.

In particular examples, a computing system may perform foveated region processing as described herein. In examples of the disclosure, the foveal zones are illustrated as rectangular although foveal zones could be shaped as concentric ovals or otherwise. In particular examples, the computing system may be embodied as an artificial reality device, such as one of an AR device, a VR device, MR device, or a hybrid reality device, or some combination and/or derivatives thereof. Current artificial reality devices may need to achieve a high resolution (e.g., 12 Mpxs, 16 Mpxs, etc.). However, to do so a large amount of data would need to be captured and processed, which may be too much for an artificial reality device. As an example and not by way of limitation, an artificial reality headset may not have the physical resources (e.g., power, memory, etc.) to handle the capture and processing of the data. To reduce the amount of data that is being captured and processed and to reduce the power consumed in processing the data, a foveal map may be used to guide the sensor readout resolution of an image sensor capture. As an example and not by way of limitation, an artificial reality device may have front facing cameras that may capture the surrounding environment. A foveal map may be used to determine the sensor readout resolution of the front facing cameras. In particular examples, a full image utilizing the full sensor readout resolution may be sent to an image signal processing (ISP) to perform foveation region downsampling. The reduction of the amount of data may help to improve functions of an artificial reality device, such as a passthrough function.

In particular examples, to generate a foveal map, the artificial reality device may perform eye-tracking for each eye. As an example and not by way of limitation, the artificial reality device may use cameras or another sensor to perform eye-tracking. The artificial reality device may use an image signal processing (ISP) to process the captured signals from cameras capturing the surrounding environment. The foveal map may be used to guide the sensor readout resolution for the cameras. As an example and not by way of limitation, the foveal map may specify various foveal regions, such as central foveal region, mid foveal region, outer foveal region, etc. The sensor readout resolution may be different for each region. For instance, the readout resolution for the central foveal region may be 1:1 resolution, whereas the mid foveal region may be a 2:1 sub-sampled readout resolution. The foveal map may also specify or be associated with zones of an image that would correspond to different sensor readout resolutions as well. In some examples, the framerates of the sensor readout are different for the different regions. For instance, the outer foveal region may have a framerate of 30 Hz, the mid foveal region may have a framerate of 60 Hz, and the central foveal region may have a framerate of 90 Hz. The foveal map zones may be based on the central foveal region, mid foveal region, outer foveal region, etc. While this disclosure describes a number of foveal regions and corresponding zones, this disclosure contemplates any number of foveal regions or zones being used as described herein. Each zone may have a unique field-of-view (FOV) and resolution. The size of each zone can change dynamically from frame-to-frame. The images of the different zones may overlap. As an example and not by way of limitation, a zone 3 image which may have a lower resolution (e.g., 4:1 sub-sampled resolution, etc.) may be a full image and a zone 2 image may have a slightly higher resolution (e.g., 2:1 sub-sampled resolution) may be stacked on top of the zone 3 image based on the foveal map.

In particular examples, the artificial reality device may use an ISP to blend the images between the different zones. In particular examples, the readout for some zones could be completely omitted, which would result in different framerates per zone. The artificial reality device may use an ISP to perform noise reduction (NR). For each zone, the artificial reality device may apply a different noise reduction algorithm. As an example and not by way of limitation, zone 1 may use the best noise reduction algorithm and zone 3 may use another noise reduction algorithm. For instances where there are separate monochromatic and RGB cameras, the artificial reality device may use an ISP to perform chroma and luma fusion. The artificial reality device may also perform depth processing and use a depth map of a scene to warp the image of each zone to the perspective of the user's eye. All of the zones may be treated similarly to process the depth. In particular examples, the artificial reality device may use the foveal map to perform depth processing. In particular examples, the artificial reality device may use a metadata of the captured images of the various zones to render the output image.

In particular examples, there would be missing image data that may need inpainting after warping the images of each zone to the perspective of the user's eye. The artificial reality device may perform machine-leaming (ML) based inpainting. Different in-painting algorithms may be applied to different zones. As an example and not by way of limitation, the artificial reality device may use ML-based inpainting for the image of zone 1 and the artificial reality device may use a combination of blending/averaging for the image of zone 2.

In particular examples, after inpainting is performed for each image of each zones, the artificial reality device may render virtual objects that are mixed in with the images of the different zones. The virtual object rendering may use foveated rendering as well. The artificial reality device may use super-resolution techniques to make the resolutions of the different zones equal so that they can be combined (e.g., blending, averaging, etc.). The type of super-resolution algorithm used can be different for each zone. In addition, the latest eye-tracking data (which may be different from the eye-tracking data to determine the foveal map) may be used to guide the type of super-resolution algorithms used. As an example and not by way of limitation, if the latest eye-tracking data shows that the user is likely looking at zone 2, the super resolution algorithm used for zone 2 may be upgraded. After super resolution techniques are applied to the images of the different zones, the images may be combined to form a single output image. In particular examples, the image corresponding to periphery regions (e.g., outer zones) may be upscaled. The boundaries of the images of the different zones may be blurred. As an example and not by way of limitation, a gaussian filter may be used to blur the boundaries of the images of the different zones. In particular examples, the images of the different zones (without being upscaled) may be directly presented and may be upscaled by the display. The output image may also be time-warped to adjust for further changes to the user's head pose. The artificial reality device may present the final image to the user through the displays of the artificial reality device. The artificial reality device may further adjust the brightness levels and the like based on where the user is viewing.

In particular examples, a computing system may perform foveated region processing as described herein. In particular examples, the computing system may be embodied as an artificial reality system. In particular examples, a computing system may determine a gaze of a user of the computing system. In particular examples, the computing system may use an eye tracker of the computing system to determine a gaze of the user. As an example and not by way of limitation, the computing system may have one or more cameras or sensors to perform eye tracking to determine a gaze of the user. In particular examples, the computing system may continuously or periodically use an eye tracker to update the gaze of the user. In particular examples, the gaze may be embodied as a visual focus point of a user. Although this disclosure describes determining a gaze of a user in a particular manner, this disclosure contemplates determining a gaze of a user in any suitable manner.

In particular examples, the computing system may generate a foveated map based on the gaze. In particular examples, the computing system may generate the foveated map to determine a sensor readout for an image sensor of the computing system. As an example and not by way of limitation, the computing system may generate a foveated map to determine a sensor readout for one or more cameras of the computing system. In particular examples, the foveated map may comprise a plurality of foveal regions. In particular examples, the plurality of foveal regions may comprise one or more of a central foveal region, a mid foveal region, or an outer foveal region. In particular examples, the computing system may generate an updated foveated map based on an updated gaze (when the computing system continually updates the gaze using an eye tracker). The updated foveated map may comprise a plurality of updated foveal regions. Although this disclosure describes generating a foveated map in a particular manner, this disclosure contemplates generating a foveated map in any suitable manner.

In particular examples, the computing system may determine a sensor readout corresponding to the image sensor. In particular examples, the computing system may determine a sensor readout that comprises a plurality of zones corresponding to the image sensor based on the plurality of foveal regions. As an example and not by way of limitation, based on where a central foveal region, a mid foveal region, or an outer foveal region, the computing system may determine the size and locations of each zone of a plurality of zones corresponding to areas of an image sensor. In particular examples, each of the plurality of zones may indicate a readout resolution for an area of the image sensor for the respective zone. In particular examples, the plurality of zones may comprise one or more of a first zone corresponding to a central foveal region, a second zone corresponding to a mid foveal region, or a third zone corresponding to an outer foveal region. In particular examples, each of the plurality of zones may further indicate a field-of-view (FOV) for the image sensor for the respective zone. In particular examples, a first zone of the plurality of zones may indicate a first readout resolution for a first area of the image sensor and a second zone of the plurality of zones may indicate a second readout resolution of a second area of the image sensor. In particular examples, the first readout resolution may be a higher resolution than the second readout resolution. In particular examples, the first area may overlap the second area. In particular examples, a first zone of the plurality of zones may be associated with a first frame rate and a second zone of the plurality of zones may be associated with a second frame rate. In particular examples, a computing system may determine an updated sensor readout computing a plurality of updated zones corresponding to the image sensor based on a plurality of updated foveal regions from an updated gaze determined from an eye tracker. Although this disclosure describes determining a sensor readout in a particular manner, this disclosure contemplates determining a sensor readout in any suitable manner.

In particular examples, the computing system may capture a first image using the image sensor. As an example and not by way of limitation, the computing system may capture a first image of a scene in a real-world environment using an image sensor, such as a front-facing camera. In particular examples, the computing system may capture a plurality of images from one or more cameras of the computing system to combine, analyze, and/or process, to generate an output image, such as one or more passthrough images to be displayed on one or more displays of the computing system. Although this disclosure describes capturing an image in a particular manner, this disclosure contemplates capturing an image in any suitable manner.

In particular examples, the computing system may generate a modified first image based on the captured first image and the sensor readout. As an example and not by way of limitation, the computing system may use the sensor readout to readout the captured image data corresponding to the captured first image at a resolution for particular areas of the image to generate the modified first image. In particular examples, the computing system may generate a modified second image based on a captured second image and an updated sensor readout generated from an updated foveated map. In particular examples, the computing system may use a first readout resolution corresponding to a first zone applied to a captured image to generate a first section of an image, a second readout resolution corresponding to a second zone applied to a captured image to generate a second section of an image, and a third readout resolution corresponding to a third zone applied to a captured image to generate a third section of an image. Although a particular number of zones is described herein, this disclosure contemplates any number of zones may be used. In particular examples, the computing system may combine the one or more sections of the image to generate the modified image from a captured image. In particular examples, the modified first image may comprise a first image section corresponding to a first sensor readout of a first zone of the plurality of zones, a second image section corresponding to a second sensor readout of a second zone of the plurality of zones, and a third image section corresponding to a third sensor readout of a third zone of the plurality of zones. In particular examples, the computing system may omit one or more areas corresponding to one or more zones of the plurality of zones to be readout in the sensor readout. Although this disclosure describes generating a modified image in a particular manner, this disclosure contemplates generating a modified image in any suitable manner.

In particular examples, the computing system may use an image signal processor of the computing system to process the images captured by the image sensor. In particular examples, the computing system may blend, using an ISP, a first sensor readout corresponding to a first zone of the plurality of zones and a second sensor readout corresponding to a second zone of the plurality of zones. As an example and not by way of limitation, the computing system may use an ISP to blend images generated from a sensor readout corresponding to a first zone and a sensor readout corresponding from a second zone. In particular examples, the computing system may use an ISP to perform noise reduction. In particular examples, the computing system may use a first noise reduction algorithm for a first zone of the plurality of zones and a second noise reduction algorithm for second zone of the plurality of zones. Although this disclosure describes using an ISP in a particular manner, this disclosure contemplates using an ISP in any suitable manner.

In particular examples, the computing system may perform depth processing using a depth map of a scene captured by a first image to determine a mapping. In particular examples, the computing system may warp a first sensor readout corresponding to a first zone of the plurality of zones based on the mapping. As an example and not by way of limitations, the computing system may warp one or more images generated from the sensor readout corresponding to the plurality of zones based on the mapping. In particular examples, the computing system may determine an inpainting algorithm to use based on a zone of the plurality of zones. In particular examples, the computing system may perform a first inpainting algorithm on the warped first sensor readout based on the first zone. In particular examples, the computing system may render one or more virtual objects in the modified first image based on the sensor readout. In particular examples, the computing system may apply one or more super-resolution techniques to make the readout resolution of each zone of the plurality of zones equal. In particular examples, the computing system may adjust a brightness level of the modified first image based on the foveated map. Although this disclosure describes performing depth processing in a particular manner, this disclosure contemplates performing depth processing in any suitable manner.

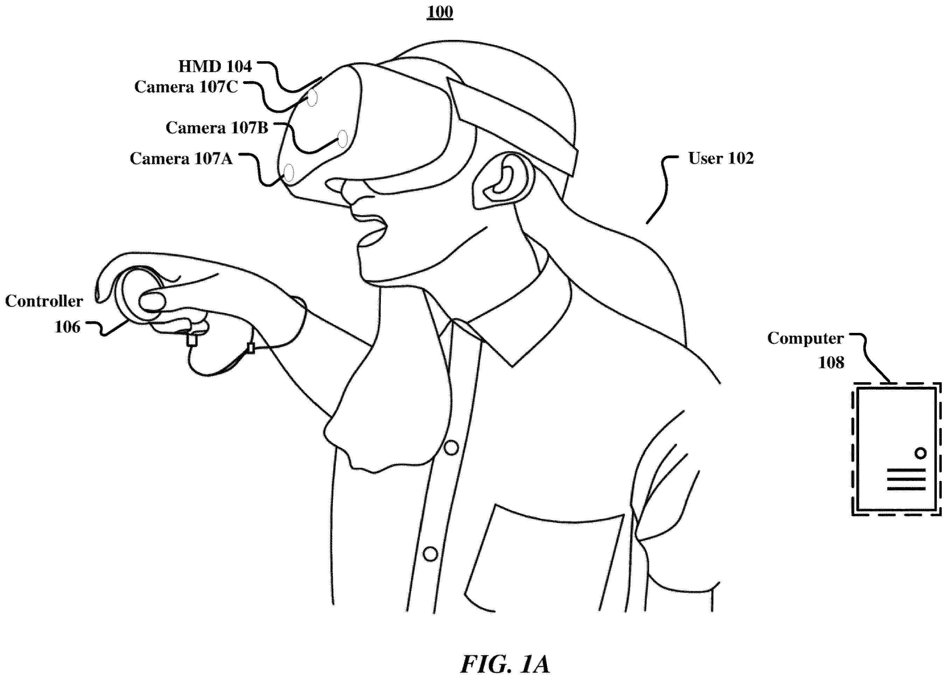

**FIG. 1A** illustrates an example of an artificial reality system 100 worn by a user 102. In particular examples, the artificial reality system 100 may comprise a head-mounted device ("HMD") 104, a controller 106, and a computing system 108. The HMD 104 may be worn over the user's eyes and provide visual content to the user 102 through internal displays (not shown). The HMD 104 may have two separate internal displays, one for each eye of the user 102. As illustrated in FIG. 1A, the HMD 104 may completely cover the user's field of view. By being the exclusive provider of visual information to the user 102, the HMD 104 achieves the goal of providing an immersive artificial-reality experience. One consequence of this, however, is that the user 102 would not be able to see the physical environment surrounding him, as his vision is shielded by the HMD 104. As such, the passthrough feature described herein is needed to provide the user with real-time visual information about his physical surroundings. The HMD 104 may comprise several external-facing cameras 107A-107C. In particular examples, cameras 107A-107B may be grayscale cameras and camera 107C may be an RGB camera. Although a number of cameras 107 are shown, artificial reality system 100 may include any number of cameras.

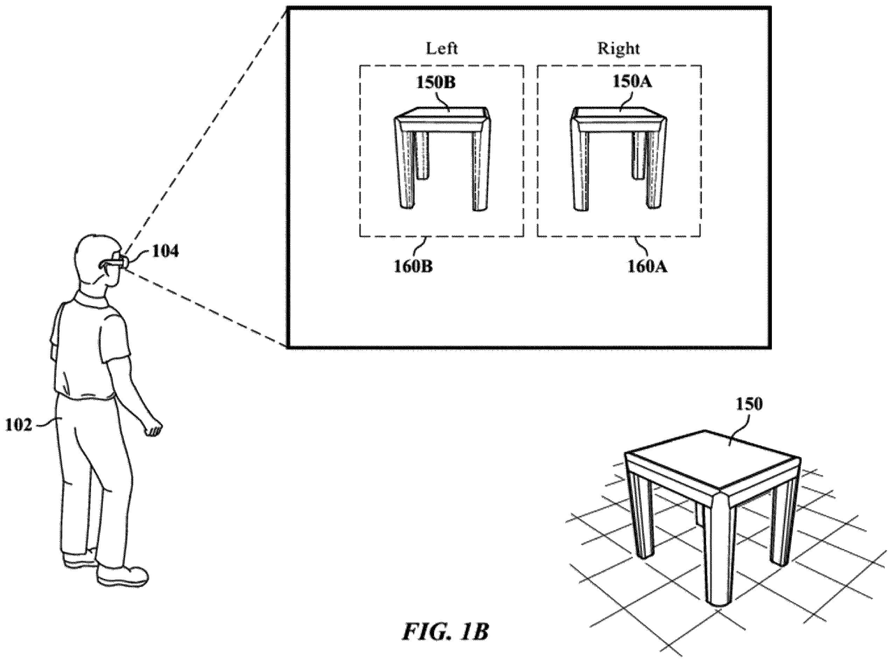

**FIG. 1B** illustrates an example of the passthrough feature. A user 102 may be wearing an HMD 104, immersed within a virtual reality environment. A physical table 150 is in the physical environment surrounding the user 102. However, due to the HMD 104 blocking the vision of the user 102, the user 102 is unable to see the table 150 directly. To help the user perceive his physical surroundings while wearing the HMD 104, the passthrough feature captures information about the physical environment using, for example, the aforementioned external-facing cameras 107A-107C. While the HMD 104 has three external-facing cameras 107A-107C, any combination of the cameras 107A-107C may be used to perform the functions as described herein. As an example and not by way of limitation, cameras 107A-107B may be used to perform one or more functions as described herein. In particular examples, the cameras 107A-107C may be used to capture images of the scene. The captured information may then be re-projected to the user 102 based on his viewpoints. In particular examples where the HMD 104 has a right display 160A for the user's right eye and a left display 160B for the user's left eye, the system 100 may individually render (1) a re-projected view 150A of the physical environment for the right display 160A based on a viewpoint of the user's right eye and (2) a re-projected view 150B of the physical environment for the left display 160B based on a viewpoint of the user's left eye.

Referring again to **FIG. 1A****,** the HMD 104 may have external-facing cameras, such as the three forward-facing cameras 107A-107C shown in FIG. 1A. While only three forward-facing cameras 107A-107C are shown, the HMD 104 may have any number of cameras facing any direction (e.g., an upward-facing camera to capture the ceiling or room lighting, a downward-facing camera to capture a portion of the user's face and/or body, a backward-facing camera to capture a portion of what's behind the user, and/or an internal camera for capturing the user's eye gaze for eye-tracking purposes). The external-facing cameras are configured to capture the physical environment around the user and may do so continuously to generate a sequence of frames (e.g., as a video). As previously explained, although images captured by the forward-facing cameras 107A-107C may be directly displayed to the user 102 via the HMD 104, doing so would not provide the user with an accurate view of the physical environment since the cameras 107A-C cannot physically be located at the exact same location as the user's eyes. As such, the passthrough feature described herein uses a re-projection technique that may generate a 3D representation of the physical environment and then renders images based on the 3D representation from the viewpoints of the user's eyes.

The 3D representation may be generated based on depth measurements of physical objects observed by the cameras 107A-107C. Depth may be measured in a variety of ways. In particular examples, depth may be computed based on stereo images. For example, the three forward-facing cameras 107A-107C may share an overlapping field of view and be configured to capture images simultaneously. As a result, the same physical object may be captured by the cameras 107A-107C at the same time. For example, a particular feature of an object may appear at one pixel p_{A} in the image captured by camera 107A, and the same feature may appear at another pixel p_{B} in the image captured by camera 107B. As long as the depth measurement system knows that the two pixels correspond to the same feature, it could use triangulation techniques to compute the depth of the observed feature. For example, based on the camera 107A's position within a 3D space and the pixel location of p_{A} relative to the camera 107A's field of view, a line could be projected from the camera 107A and through the pixel p_{A}. A similar line could be projected from the other camera 107B and through the pixel p_{B}. Since both pixels are supposed to correspond to the same physical feature, the two lines should intersect. The two intersecting lines and an imaginary line drawn between the two cameras 107A and 107B form a triangle, which could be used to compute the distance of the observed feature from either camera 107A or 107B or a point in space where the observed feature is located. The same can be done between either of cameras 107A-107B and camera 107C.

In particular examples, the pose (e.g., position and orientation) of the HMD 104 within the environment may be needed. For example, in order to render the appropriate display for the user 102 while he is moving about in a virtual environment, the system 100 would need to determine his position and orientation at any moment. Based on the pose of the HMD, the system 100 may further determine the viewpoint of either of the cameras 107A-107C or either of the user's eyes. In particular examples, the HMD 104 may be equipped with inertial-measurement units ("IMU"). The data generated by the IMU, along with the stereo imagery captured by the external-facing cameras 107A-107B, allow the system 100 to compute the pose of the HMD 104 using, for example, SLAM (simultaneous localization and mapping) or other suitable techniques.

In particular examples, the artificial reality system 100 may further have one or more controllers 106 that enable the user 102 to provide inputs. The controller 106 may communicate with the HMD 104 or a separate computing unit 108 via a wireless or wired connection. The controller 106 may have any number of buttons or other mechanical input mechanisms. In addition, the controller 106 may have an IMU so that the position of the controller 106 may be tracked. The controller 106 may further be tracked based on predetermined patterns on the controller. For example, the controller 106 may have several infrared LEDs or other known observable features that collectively form a predetermined pattern. Using a sensor or camera, the system 100 may be able to capture an image of the predetermined pattern on the controller. Based on the observed orientation of those patterns, the system may compute the controller's position and orientation relative to the sensor or camera.

The artificial reality system 100 may further include a computer unit 108. The computer unit may be a stand-alone unit that is physically separate from the HMD 104, or it may be integrated with the HMD 104. In examples where the computer 108 is a separate unit, it may be communicatively coupled to the HMD 104 via a wireless or wired link. The computer 108 may be a high-performance device, such as a desktop or laptop, or a resource-limited device, such as a mobile phone. A high-performance device may have a dedicated GPU and a high-capacity or constant power source. A resource-limited device, on the other hand, may not have a GPU and may have limited battery capacity. As such, the algorithms that could be practically used by an artificial reality system 100 depends on the capabilities of its computer unit 108.

In examples where the computing unit 108 is a high-performance device, an example of the passthrough feature may be designed as follows. Through the external-facing cameras 107A-107C of the HMD 104, a sequence of images of the surrounding physical environment may be captured. The information captured by the cameras 107A-107C, however, would be misaligned with what the user's eyes would capture since the cameras could not spatially coincide with the user's eyes (e.g., the cameras would be located some distance away from the user's eyes and, consequently, have different viewpoints). As such, simply displaying what the cameras captured to the user would not be an accurate representation of what the user should perceive.

Instead of simply displaying what was captured, the passthrough feature would re-project information captured by the external-facing cameras 107A-107C to the user. Each pair of simultaneously captured stereo images may be used to estimate the depths of observed features. As explained above, to measure depth using triangulation, the computing unit 108 would need to find correspondences between the stereo images. For example, the computing unit 108 would determine which two pixels in the pair of stereo images correspond to the same observed feature. A high-performance computing unit 108 may solve the correspondence problem using its GPU and optical flow techniques, which are optimized for such tasks. The correspondence information may then be used to compute depths using triangulation techniques. Based on the computed depths of the observed features, the computing unit 108 could determine where those features are located within a 3D space (since the computing unit 108 also knows where the cameras are in that 3D space). The result may be represented by a dense 3D point cloud, with each point corresponding to an observed feature. The dense point cloud may then be used to generate 3D models of objects in the environment. When the system renders a scene for display, the system could perform visibility tests from the perspectives of the user's eyes. For example, the system may cast rays into the 3D space from a viewpoint that corresponds to each eye of the user. In this manner, the rendered scene that is displayed to the user would be computed from the perspective of the user's eyes, rather than from the perspective of the external-facing cameras 107A-107C. In particular examples, the system may use dynamic distortion correction to apply to the rendered scene.

The process described above, however, may not be feasible for a resource-limited computing unit (e.g., a mobile phone may be the main computational unit for the HMD). For example, unlike systems with powerful computational resources and ample energy sources, a mobile phone cannot rely on GPUs and computationally-expensive algorithms (e.g., optical flow) to perform depth measurements and generate an accurate 3D model of the environment. Thus, to provide passthrough on resource-limited devices, an optimized process may be needed.

In particular examples, the computing device may be configured to dynamically determine, at runtime, whether it is capable of or able to generate depth measurements using (1) the GPU and optical flow or (2) the optimized technique using video encoder and motion vectors, as described in further detail below. For example, if the device has a GPU and sufficient power budget (e.g., it is plugged into a power source, has a full battery, etc.), it may perform depth measurements using its GPU and optical flow. However, if the device does not have a GPU or has a stringent power budget, then it may opt for the optimized method for computing depths.

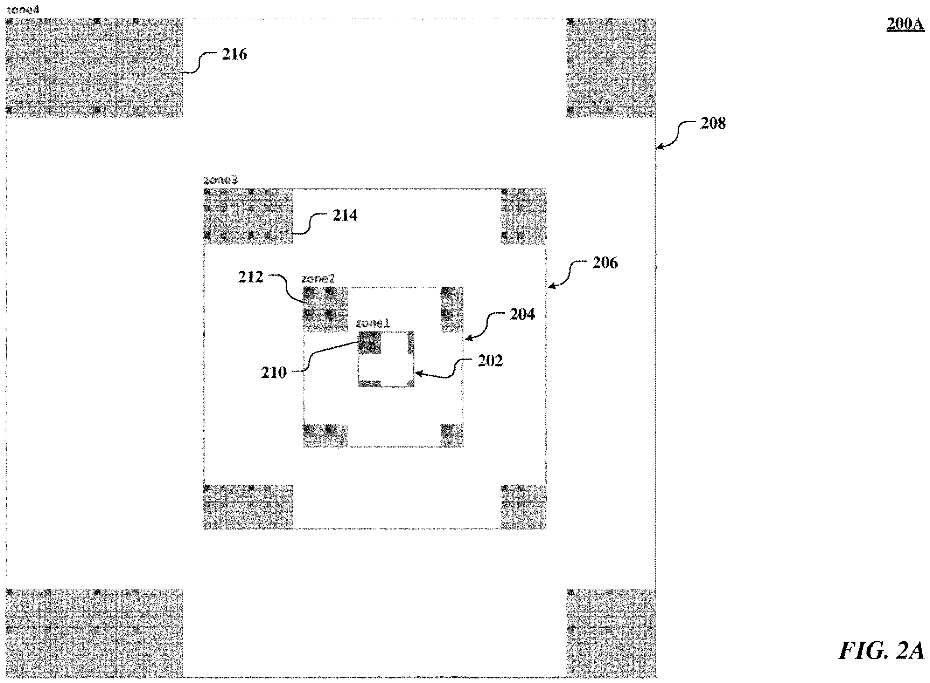

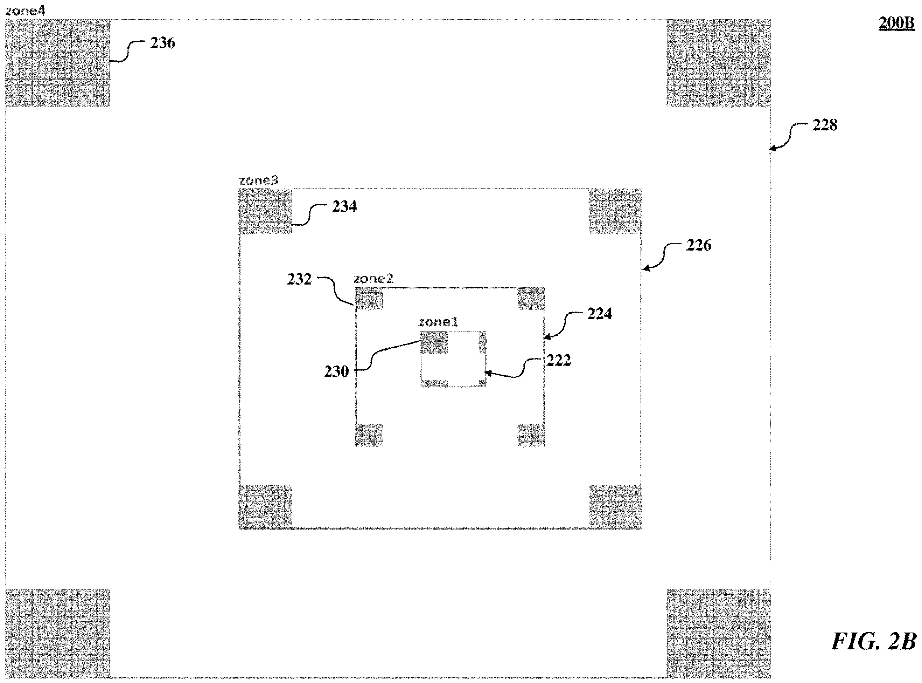

**FIGS. 2A** **and** **2B** illustrate example sensor readouts of an image sensor, in accordance with particular examples. Referring to **FIG. 2A****,** an example sensor readout 200A is shown. In particular examples, the sensor readout 200A may include a plurality of zones 202, 204, 206, 208. As an example and not by way of limitation, the sensor readout 200A may include a first zone 202, a second zone 204, a third zone 206, and a fourth zone 208. Although a particular number of zones are shown, this disclosure contemplates a sensor readout that includes any number of zones in any suitable configuration. In particular examples, zone 1 202 may include a sensor resolution 210 that specifies the pattern of pixels to readout on an area of the image sensor. In particular examples, the sensor resolution 210 for zone 1 202 may be full resolution. In particular examples, zone 2 204 may include a sensor resolution 212 that specifies the pattern of pixels to readout on an area of the image sensor. In particular examples, the sensor resolution 212 for zone 2 204 may be 1/2 resolution. In particular examples, zone 3 206 may include a sensor resolution 214 that specifies the pattern of pixels to readout on an area of the image sensor. In particular examples, the sensor resolution 214 may be 1/4 resolution. In particular examples, zone 4 208 may include a sensor resolution 216 that specifies the pattern of pixels to readout on an area of the image sensor. In particular examples, the sensor resolution 216 may be 1/8 resolution. In particular examples, the sensor resolutions 210, 212, 214, 216 may specify one or more RGB pixels to be readout in a sensor readout 200A. In particular examples, an RGB camera may use the sensor readout 200A to readout the pixels specified to generate an output image as described herein. In particular examples, zone 1 202 may generate a first image, zone 2 204 may generate a second image, zone 3 206 may generate a third image, and zone 4 208 may generate fourth image based on their respective sensor resolutions 210, 212, 214, 216. In particular examples, an RGB camera may generate an output image using the sensor readout 200A and send the output image to an ISP for processing as described herein. In particular examples, the image sensor using the sensor readout 200A may output the active pixels specified by the sensor readout 200A. In particular examples, the frame ROI location and size may be programmable. In particular examples, while a uniform distribution of the pixels in the sensor resolution 210, 212, 214, 216 is shown, a non-uniform distribution may also be used for the sensor readout 200A. In particular examples, algorithms may be used to combine multiple pixels from a full sensor readout or the sensor readout 200A into a single pixel, such as through averaging.

Referring to **FIG. 2B****,** another example sensor readout 200B is shown. In particular examples, the sensor readout 200B may include a plurality of zones 222, 224, 226, 228. As an example and not by way of limitation, the sensor readout 200B may include a first zone 222, a second zone 224, a third zone 226, and a fourth zone 228. Although a particular number of zones are shown, this disclosure contemplates a sensor readout that includes any number of zones in any suitable configuration. In particular examples, zone 1 222 may include a sensor resolution 230 that specifies the pattern of pixels to readout on an area of the image sensor. In particular examples, the sensor resolution 230 for zone 1 222 may be full resolution. In particular examples, zone 2 224 may include a sensor resolution 232 that specifies the pattern of pixels to readout on an area of the image sensor. In particular examples, the sensor resolution 232 for zone 2 224 may be 1/2 resolution. In particular examples, zone 3 226 may include a sensor resolution 234 that specifies the pattern of pixels to readout on an area of the image sensor. In particular examples, the sensor resolution 234 may be 1/4 resolution. In particular examples, zone 4 228 may include a sensor resolution 236 that specifies the pattern of pixels to readout on an area of the image sensor. In particular examples, the sensor resolution 236 may be 1/8 resolution. In particular examples, the sensor resolutions 230, 232, 234, 236 may specify one or more mono pixels to be readout in a sensor readout 200B. In particular examples, a mono camera may use the sensor readout 200B to readout the pixels specified to generate an output image as described herein. In particular examples, zone 1 222 may generate a first image, zone 2 224 may generate a second image, zone 3 226 may generate a third image, and zone 4 228 may generate fourth image based on their respective sensor resolutions 230, 232, 234, 236. In particular examples, a mono camera may generate an output image using the sensor readout 200B and send the output image to an ISP for processing as described herein. In particular examples, the image sensor using the sensor readout 200B may output the active pixels specified by the sensor readout 200B. In particular examples, the frame ROI location and size may be programmable. In particular examples, algorithms may be used to combine multiple pixels from a full sensor readout or the sensor readout 200B into a single pixel, such as through averaging.

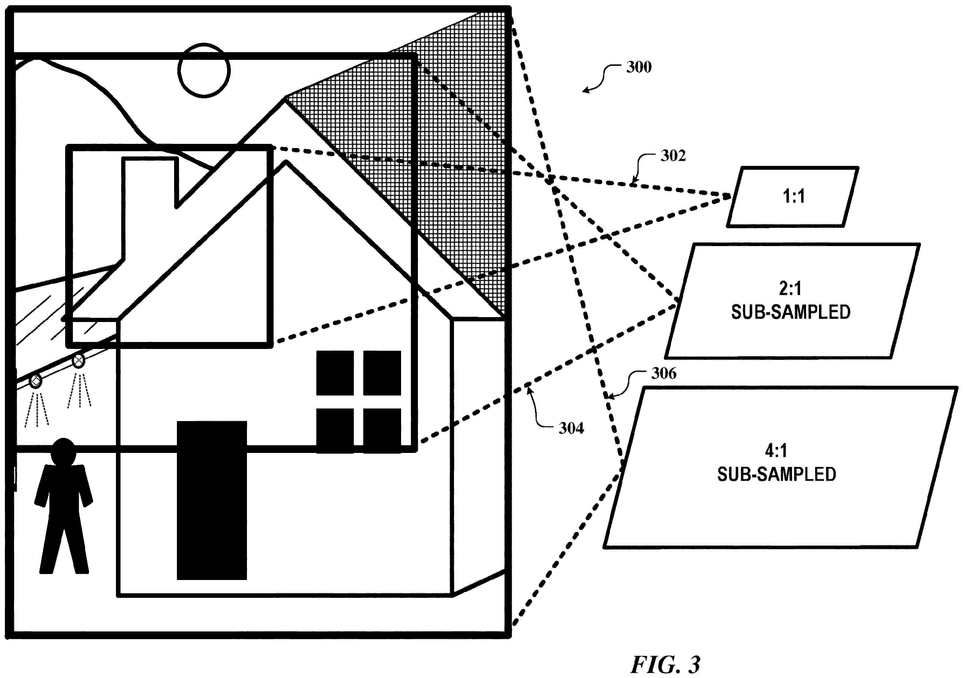

**FIG. 3** illustrates an example image sectioned into a plurality of different zones, in accordance with particular examples. In particular examples, the image 300 may include a plurality of zones 302, 304, 306. Image 300 includes a house, a person, and a moon. In particular examples, the image 300 may include an indication of the eye gaze which would represent the focal point of the user's eyes. In particular examples, the eye gaze may be used to determine a foveated map as described herein. The foveated map may be used to determine a sensor readout that corresponds to the plurality of zones 302, 304, 306. As shown in FIG. 3, the image 300 has different resolutions for each zone. In zone 1 302, the resolution is 1:1. In zone 2 304, the resolution is 2:1 sub-sampled. In zone 3 306, the resolution is 4:1 sub-sampled. As shown, the further away from the center of the user's eye gaze, the lower the resolution of the output image. In particular examples, image 300 may represent the output image from the camera. The image 300 may be processed by a computing system to generate an output display image to present to a user of the computing system as described herein.

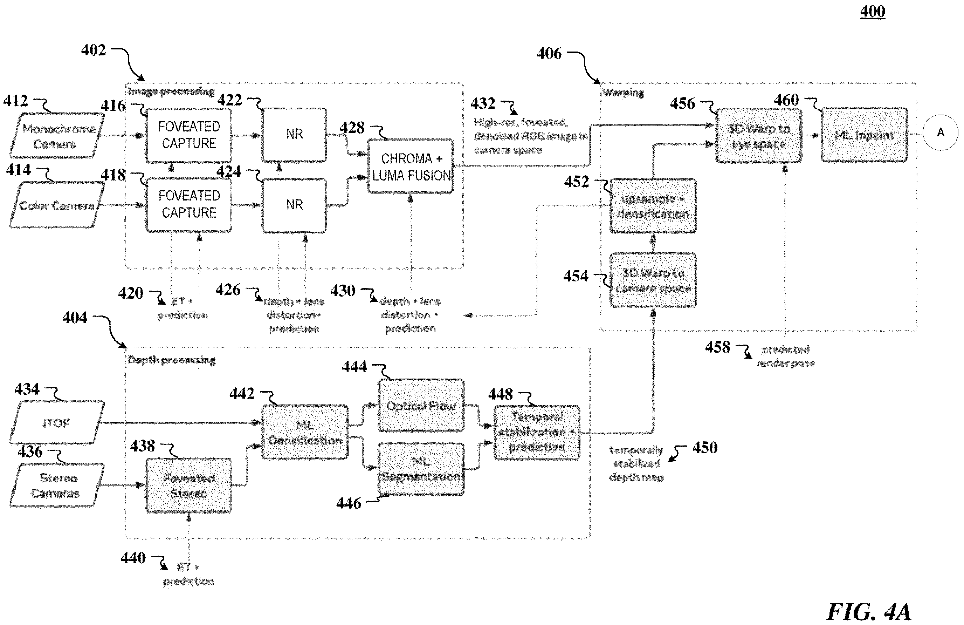

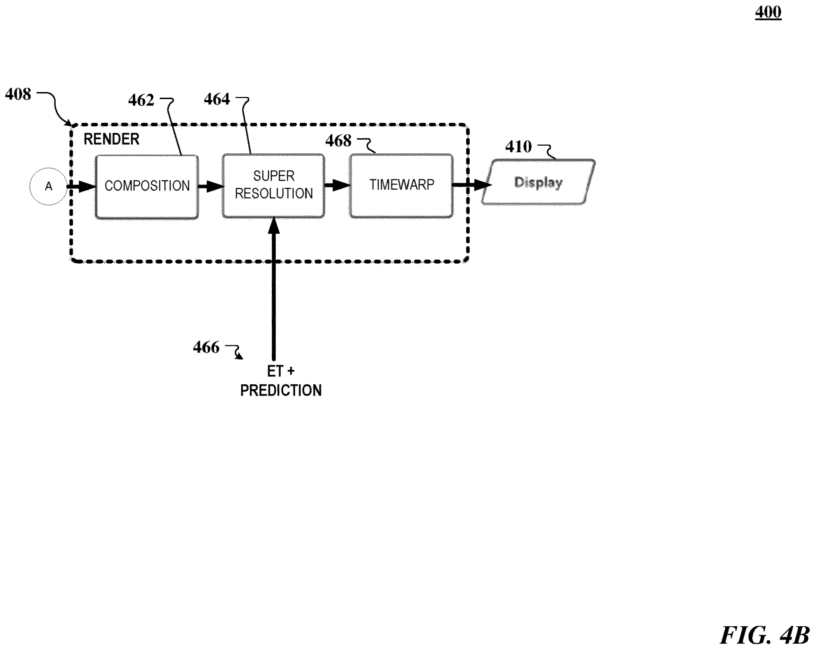

**FIGS. 4A** **and** **4B** illustrate an example process of foveated region processing, in accordance with particular examples. Referring to **FIG. 4A****,** a process 400 of foveated region processing may be performed by a computing system as described herein. In particular examples, the process 400 may include image processing 402, depth processing 404, warping 406, rendering 408 (shown in FIG. 4B), and displaying 410 (shown in FIG. 4B). In particular examples, the process 400 may simultaneously perform both image processing 402 and depth processing 404 or in any particular order. In particular examples, the process 400 may start with a monochrome camera 412 capturing a monochromatic image and a color camera 414 capturing an RGB image. The images captured by the monochrome camera and the color camera 414 may be sent to an ISP to be processed 402. In particular examples, the computing system may perform eye tracking and determine a gaze of the user 420 that is used for foveated capture 416 and foveated capture 418 corresponding to a monochromatic image captured by the monochrome camera 412 and an RGB image captured by the color camera 414. In examples of the disclosure, the eye tracking to determine a gaze of the user may be a predicted gaze for some time in the future (e.g. 50 ms in the future). The foveated capture 416 may generate a foveated map based on the determined gaze of the user 420 and use the generated foveated map to determine a sensor readout for the monochrome camera 412 as described herein. The output of the foveated capture 416 may be a reduced resolution monochromatic image. The foveated capture 418 may generate a foveated map based on the determined gaze of the user 420 and use the generated foveated map to determine a sensor readout for the color camera 414 as described herein. The output of the foveated capture 418 may be a reduced resolution RGB image. The foveated captures 416, 418 may output to a respective NR 422, 424. The NR 422, 424 may receive depth, lens distortion, and prediction information 426 to perform the NR. The NR may be different for different foveal zones. In an example, NR could be applied to fovea regions and no NR used for non-foveal regions. The outputs of the NR 422, 424 may be combined in a chroma and luma fusion 428. The chroma and luma fusion 428 may receive depth, lens distortion, and prediction information 430 to perform the chroma and luma fusion 428. In particular examples, the depth, lens distortion, and prediction 426 may be the same as depth, lens distortion, and prediction 430. In particular examples, the chroma and luma fusion 428 may output a high-resolution, foveated, denoised RGB image in camera space 432 to be processed by the warping process 406. While only one set of monochrome camera 412 and color camera 414 is shown in this process 400, there may be additional sets of monochrome cameras 412 and color cameras 414 that are used to capture images that are used for image processing 402. As an example and not by way of limitation, a set of cameras may be used for each eye. In some examples, in chroma and luma fusions 428, foveation for full fused images are different for Luma component and chroma - for chroma it could be stronger, for example. In an example, the 2^{nd} foveal region luma downsampling may be 2x and chroma could be 4x.

In particular examples, the indirect time-of-flight (iTOF) 434 may generate distance measurements to be used in depth processing 404. Although this disclosure describes using iTOF, this disclosure contemplates using direct time-of-flight (dTOF) or any time-of-flight technology. In particular examples, the stereo cameras 436 may capture stereoscopic images to be used in depth processing 404. In particular examples, the stereoscopic images may be sent to a foveated stereo 438. The foveated stereo 438 may receive a determined gaze of the user 440 (which may be the same as the determined gaze of the user 420). The foveated stereo 438 may generate a foveated map to determine a sensor readout of each of the stereo cameras 436 as described herein. The output of the iTOF 434 and the foveated stereo 438 are sent to a machine learning densification 442. The output of the ML densification 442 are sent to an optical flow 444 process and a ML segmentation process 446. The outputs of the optical flow 444 and the ML segmentation process 446 are combined using temporal stabilization and prediction 448 to generate a temporally stabilized depth map 450. The temporally stabilized depth map 450 goes through a 3D warp to camera space process 454. The output of the 3D warp to camera space process 454 goes through an unsample and densification process 452. The output of the unsample and densification process 452 is used for the depth, lens distortion, and prediction 426, 430. The output of the unsample and densification process 452 is combined with the high-resolution, foveated, denoised RGB image in camera space 432 through a 3D warp to eye space process 456. The 3D warp to eye space process 456 may receive a predicted render pose 458. The 3D warp to eye space process 456 warps the image to a baseline of the eyes of the user. The output of the 3D warp to eye space process 456 may be sent to an ML inpainting process 460. The ML inpainting process 460 corrects warping artifacts that appear from the warping process 406.

In particular examples, the output of the ML inpainting process 460 may be sent to the rendering process 408 as shown in **FIG. 4B****.** The output of the ML inpainting process 460 may go through a composition process 462, where one or more virtual objects are rendered within the image. The composed image from the composition process 462 may then be placed through a super resolution process 464 where one or more super resolution techniques may be applied to the composed image. The super resolution process 464 may use a current updated gaze of the user 466 to perform one or more super resolution techniques. As an example and not by way of limitation, the super resolution process 464 may apply different super resolution techniques to the composed image to make the resolution of the entire image equal as described herein. That is, if there are different resolutions as a result from the foveated capture, the super resolution process 464 applies one or more super resolution techniques to make the resolution of the image equal. The output of the super resolution process 464 is sent to a time warp process 468 that performs time warping on the image to be displayed in the display process 410. In particular examples, the image is displayed to one or more displays of the computing system in the display process 410. In particular examples, the process 400 may be performed for cameras for each eye of the user to render output images that correspond to a passthrough function.

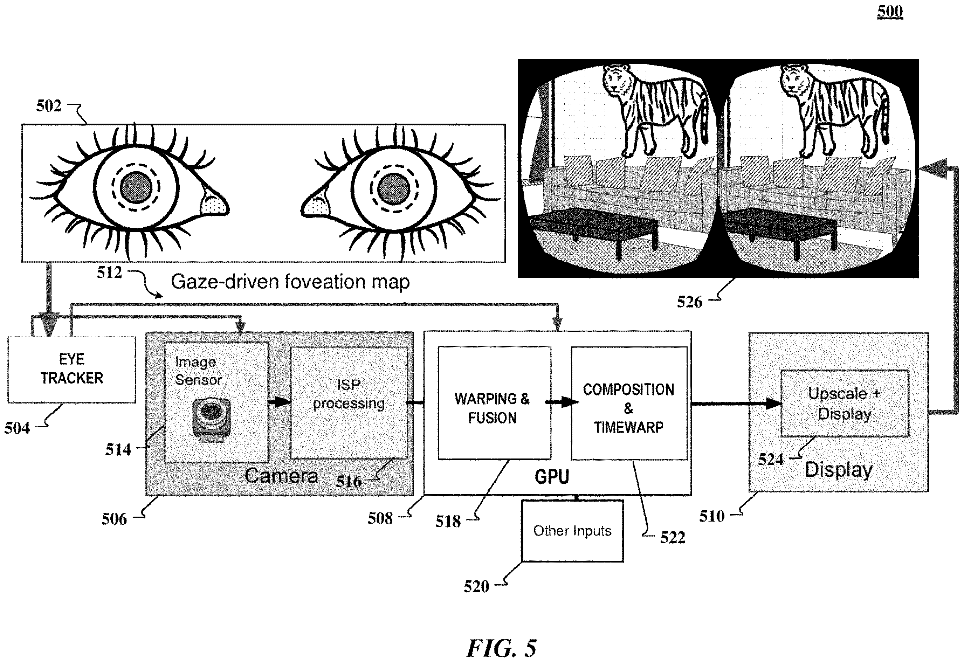

**FIG. 5** illustrates another example process of foveated region processing, in accordance with particular examples. The process 500 may start with captured images 502 of the eyes of the user. The captured images 502 may be sent to an eye tracker 504 that determines a gaze of the user. The gaze of the user may be used to generate a gaze-driven foveation map 512 that is sent to a camera 506 and to a GPU 508. The camera 506 may use an image sensor 514 to capture an image of a scene of a real-world environment of the user. The image of the scene of the real-world environment of the user may be used for a passthrough function. In particular examples, the image sensor 514 may use the gaze-driven foveation map 512 to readout the pixels of the image sensor 514. The output of the image sensor 514 may comprise lesser pixels than a full image as described herein. The output of the image sensor is sent to ISP processing 516 as described herein. The ISP processing 516 may also use the gaze-driven foveation map 512 to perform ISP processing 516. The processed image is sent to the GPU 508 to go through warping and fusion 518. In particular examples, the GPU 508 may receive other inputs 520, such as depth measurements and VR content. In particular examples, the GPU 508 may use the gaze-driven foveation map 512 for one or more processes. After the processed image goes through the warping and fusion process 518, the output goes through a composition and time warp process 522. The composition and time warp process 522 may use the gaze-driven foveation map 512 and one or more other inputs 520 to perform the composition and time warp. The GPU 508 sends an output image to the display 510, which may be similar to the output sent to the display process 410 (shown in FIG. 4B). The display 510 performs an upscale and display process 524 on the image received from the GPU 508. The display 510 outputs images 526 to the displays of a computing system. As an example and not by way of limitation, the display 510 outputs images 526 to a left display and a right display to be viewed on a headset device.

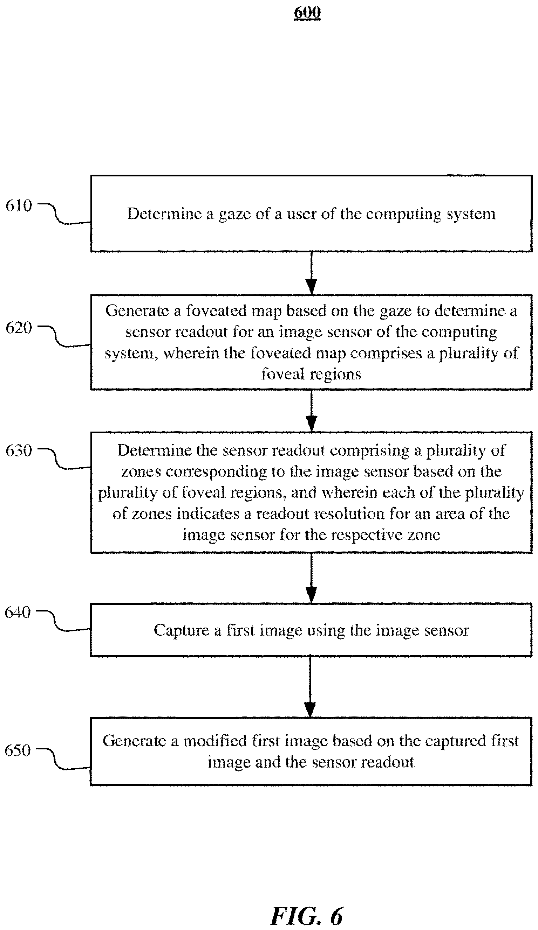

**FIG. 6** illustrates an example method 600 for foveated region processing. The method may begin at step 610, where a computing system may determine a gaze of a user of the computing system. At step 620, the computing system may generate a foveated map based on the gaze to determine a sensor readout for an image sensor of the computing system. In particular examples, the foveated map may comprise a plurality of foveal regions. At step 630, the computing system may determine the sensor readout comprising a plurality of zones corresponding to the image sensor based on the plurality of foveal regions. In particular examples, each of the plurality of zones may indicate a readout resolution for an area of the image sensor for the respective zone. At step 640, the computing system may capture a first image using the image sensor. At step 650, the computing system may generate a modified first image based on the captured first image and the sensor readout.

Particular examples may repeat one or more steps of the method of FIG. 6, where appropriate. Although this disclosure describes and illustrates particular steps of the method of FIG. 6 as occurring in a particular order, this disclosure contemplates any suitable steps of the method of FIG. 6 occurring in any suitable order. Moreover, although this disclosure describes and illustrates an example method for foveated region processing, including the particular steps of the method of FIG. 6, this disclosure contemplates any suitable method for foveated region processing, including any suitable steps, which may include a subset of the steps of the method of FIG. 6, where appropriate. Furthermore, although this disclosure describes and illustrates particular components, devices, or systems carrying out particular steps of the method of FIG. 6, this disclosure contemplates any suitable combination of any suitable components, devices, or systems carrying out any suitable steps of the method of FIG.6.

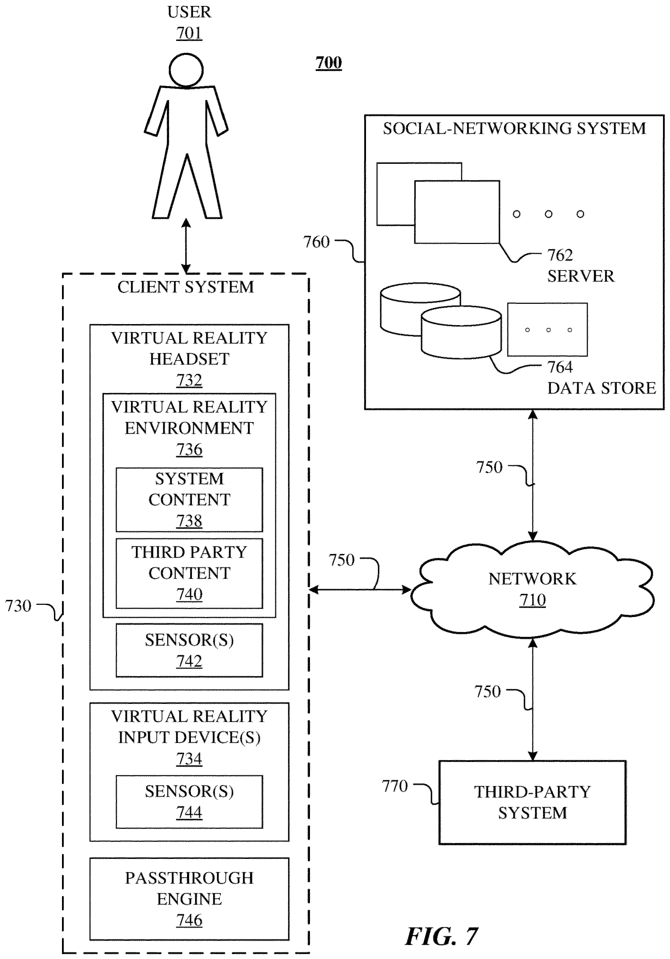

**FIG. 7** illustrates an example network environment 700 associated with an artificial reality system. Although FIG. 7 may be illustrated with a virtual reality system, this example network environment 700 may include one or more other artificial reality systems. Network environment 700 includes a user 701 interacting with a client system 730, a social-networking system 760, and a third-party system 770 connected to each other by a network 710. Although FIG. 7 illustrates a particular arrangement of a user 701, a client system 730, a social-networking system 760, a third-party system 770, and a network 710, this disclosure contemplates any suitable arrangement of a user 701, a client system 730, a social-networking system 760, a third-party system 770, and a network 710. As an example and not by way of limitation, two or more of a user 701, a client system 730, a social-networking system 760, and a third-party system 770 may be connected to each other directly, bypassing a network 710. As another example, two or more of a client system 730, a social-networking system 760, and a third-party system 770 may be physically or logically co-located with each other in whole or in part. Moreover, although FIG. 7 illustrates a particular number of users 701, client systems 730, social-networking systems 760, third-party systems 770, and networks 710, this disclosure contemplates any suitable number of client systems 730, social-networking systems 760, third-party systems 770, and networks 710. As an example and not by way of limitation, network environment 700 may include multiple users 701, client systems 730, social-networking systems 760, third-party systems 770, and networks 710.

This disclosure contemplates any suitable network 710. As an example and not by way of limitation, one or more portions of a network 710 may include an ad hoc network, an intranet, an extranet, a virtual private network (VPN), a local area network (LAN), a wireless LAN (WLAN), a wide area network (WAN), a wireless WAN (WWAN), a metropolitan area network (MAN), a portion of the Internet, a portion of the Public Switched Telephone Network (PSTN), a cellular telephone network, or a combination of two or more of these. A network 710 may include one or more networks 710.

Links 750 may connect a client system 730, a social-networking system 760, and a third-party system 770 to a communication network 710 or to each other. This disclosure contemplates any suitable links 750. In particular examples, one or more links 750 include one or more wireline (such as for example Digital Subscriber Line (DSL) or Data Over Cable Service Interface Specification (DOCSIS)), wireless (such as for example Wi-Fi or Worldwide Interoperability for Microwave Access (WiMAX)), or optical (such as for example Synchronous Optical Network (SONET) or Synchronous Digital Hierarchy (SDH)) links. In particular examples, one or more links 750 each include an ad hoc network, an intranet, an extranet, a VPN, a LAN, a WLAN, a WAN, a WWAN, a MAN, a portion of the Internet, a portion of the PSTN, a cellular technology-based network, a satellite communications technology-based network, another link 750, or a combination of two or more such links 750. Links 750 need not necessarily be the same throughout a network environment 700. One or more first links 750 may differ in one or more respects from one or more second links 750.

In particular examples, a client system 730 may be an electronic device including hardware, software, or embedded logic components or a combination of two or more such components and capable of carrying out the appropriate functionalities implemented or supported by a client system 730. As an example and not by way of limitation, a client system 730 may include a computer system such as a desktop computer, notebook or laptop computer, netbook, a tablet computer, e-book reader, GPS device, camera, personal digital assistant (PDA), handheld electronic device, cellular telephone, smartphone, virtual reality headset and controllers, other suitable electronic device, or any suitable combination thereof. This disclosure contemplates any suitable client systems 730. A client system 730 may enable a network user at a client system 730 to access a network 710. A client system 730 may enable its user to communicate with other users at other client systems 730. A client system 730 may generate a virtual reality environment for a user to interact with content.

In particular examples, a client system 730 may include a virtual reality (or augmented reality or mixed reality) headset 732, and virtual reality input device(s) 734, such as a virtual reality controller. A user at a client system 730 may wear the virtual reality headset 732 and use the virtual reality input device(s) to interact with a virtual reality environment 736 generated by the virtual reality headset 732. Although not shown, a client system 730 may also include a separate processing computer and/or any other component of a virtual reality system. A virtual reality headset 732 may generate a virtual reality environment 736, which may include system content 738 (including but not limited to the operating system), such as software or firmware updates and also include third-party content 740, such as content from applications or dynamically downloaded from the Internet (e.g., web page content). A virtual reality headset 732 may include sensor(s) 742, such as accelerometers, gyroscopes, magnetometers to generate sensor data that tracks the location of the headset device 732. The headset 732 may also include eye trackers for tracking the position of the user's eyes or their viewing directions. The client system may use data from the sensor(s) 742 to determine velocity, orientation, and gravitation forces with respect to the headset. Virtual reality input device(s) 734 may include sensor(s) 744, such as accelerometers, gyroscopes, magnetometers, and touch sensors to generate sensor data that tracks the location of the input device 734 and the positions of the user's fingers. The client system 730 may make use of outside-in tracking, in which a tracking camera (not shown) is placed external to the virtual reality headset 732 and within the line of sight of the virtual reality headset 732. In outside-in tracking, the tracking camera may track the location of the virtual reality headset 732 (e.g., by tracking one or more infrared LED markers on the virtual reality headset 732). Alternatively or additionally, the client system 730 may make use of inside-out tracking, in which a tracking camera (not shown) may be placed on or within the virtual reality headset 732 itself. In inside-out tracking, the tracking camera may capture images around it in the real world and may use the changing perspectives of the real world to determine its own position in space.

In particular examples, client system 730 (e.g., an HMD) may include a passthrough engine 746 to provide the passthrough feature described herein, and may have one or more add-ons, plug-ins, or other extensions. A user at client system 730 may connect to a particular server (such as server 762, or a server associated with a third-party system 770). The server may accept the request and communicate with the client system 730.

Third-party content 740 may include a web browser and may have one or more add-ons, plug-ins, or other extensions. A user at a client system 730 may enter a Uniform Resource Locator (URL) or other address directing a web browser to a particular server (such as server 762, or a server associated with a third-party system 770), and the web browser may generate a Hyper Text Transfer Protocol (HTTP) request and communicate the HTTP request to server. The server may accept the HTTP request and communicate to a client system 730 one or more Hyper Text Markup Language (HTML) files responsive to the HTTP request. The client system 730 may render a web interface (e.g. a webpage) based on the HTML files from the server for presentation to the user. This disclosure contemplates any suitable source files. As an example and not by way of limitation, a web interface may be rendered from HTML files, Extensible Hyper Text Markup Language (XHTML) files, or Extensible Markup Language (XML) files, according to particular needs. Such interfaces may also execute scripts such as, for example and without limitation combinations of markup language and scripts, and the like. Herein, reference to a web interface encompasses one or more corresponding source files (which a browser may use to render the web interface) and vice versa, where appropriate.

In particular examples, the social-networking system 760 may be a network-addressable computing system that can host an online social network. The social-networking system 760 may generate, store, receive, and send social-networking data, such as, for example, user-profile data, concept-profile data, social-graph information, or other suitable data related to the online social network. The social-networking system 760 may be accessed by the other components of network environment 700 either directly or via a network 710. As an example and not by way of limitation, a client system 730 may access the social-networking system 760 using a web browser of a third-party content 740, or a native application associated with the social-networking system 760 (e.g., a mobile social-networking application, a messaging application, another suitable application, or any combination thereof) either directly or via a network 710. In particular examples, the social-networking system 760 may include one or more servers 762. Each server 762 may be a unitary server or a distributed server spanning multiple computers or multiple datacenters. Servers 762 may be of various types, such as, for example and without limitation, web server, news server, mail server, message server, advertising server, file server, application server, exchange server, database server, proxy server, another server suitable for performing functions or processes described herein, or any combination thereof. In particular examples, each server 762 may include hardware, software, or embedded logic components or a combination of two or more such components for carrying out the appropriate functionalities implemented or supported by server 762. In particular examples, the social-networking system 760 may include one or more data stores 764. Data stores 764 may be used to store various types of information. In particular examples, the information stored in data stores 764 may be organized according to specific data structures. In particular examples, each data store 764 may be a relational, columnar, correlation, or other suitable database. Although this disclosure describes or illustrates particular types of databases, this disclosure contemplates any suitable types of databases. Particular examples may provide interfaces that enable a client system 730, a social-networking system 760, or a third-party system 770 to manage, retrieve, modify, add, or delete, the information stored in data store 764.

In particular examples, the social-networking system 760 may store one or more social graphs in one or more data stores 764. In particular examples, a social graph may include multiple nodes-which may include multiple user nodes (each corresponding to a particular user) or multiple concept nodes (each corresponding to a particular concept)-and multiple edges connecting the nodes. The social-networking system 760 may provide users of the online social network the ability to communicate and interact with other users. In particular examples, users may join the online social network via the social-networking system 760 and then add connections (e.g., relationships) to a number of other users of the social-networking system 760 whom they want to be connected to. Herein, the term "friend" may refer to any other user of the social-networking system 760 with whom a user has formed a connection, association, or relationship via the social-networking system 760.

In particular examples, the social-networking system 760 may provide users with the ability to take actions on various types of items or objects, supported by the social-networking system 760. As an example and not by way of limitation, the items and objects may include groups or social networks to which users of the social-networking system 760 may belong, events or calendar entries in which a user might be interested, computer-based applications that a user may use, transactions that allow users to buy or sell items via the service, interactions with advertisements that a user may perform, or other suitable items or objects. A user may interact with anything that is capable of being represented in the social-networking system 760 or by an external system of a third-party system 770, which is separate from the social-networking system 760 and coupled to the social-networking system 760 via a network 710.

In particular examples, the social-networking system 760 may be capable of linking a variety of entities. As an example and not by way of limitation, the social-networking system 760 may enable users to interact with each other as well as receive content from third-party systems 770 or other entities, or to allow users to interact with these entities through an application programming interfaces (API) or other communication channels.

In particular examples, a third-party system 770 may include one or more types of servers, one or more data stores, one or more interfaces, including but not limited to APIs, one or more web services, one or more content sources, one or more networks, or any other suitable components, e.g., that servers may communicate with. A third-party system 770 may be operated by a different entity from an entity operating the social-networking system 760. In particular examples, however, the social-networking system 760 and third-party systems 770 may operate in conjunction with each other to provide social-networking services to users of the social-networking system 760 or third-party systems 770. In this sense, the social-networking system 760 may provide a platform, or backbone, which other systems, such as third-party systems 770, may use to provide social-networking services and functionality to users across the Internet.

In particular examples, a third-party system 770 may include a third-party content object provider. A third-party content object provider may include one or more sources of content objects, which may be communicated to a client system 730. As an example and not by way of limitation, content objects may include information regarding things or activities of interest to the user, such as, for example, movie show times, movie reviews, restaurant reviews, restaurant menus, product information and reviews, or other suitable information. As another example and not by way of limitation, content objects may include incentive content objects, such as coupons, discount tickets, gift certificates, or other suitable incentive objects.

In particular examples, the social-networking system 760 also includes user-generated content objects, which may enhance a user's interactions with the social-networking system 760. User-generated content may include anything a user can add, upload, send, or "post" to the social-networking system 760. As an example and not by way of limitation, a user communicates posts to the social-networking system 760 from a client system 730. Posts may include data such as status updates or other textual data, location information, photos, videos, links, music or other similar data or media. Content may also be added to the social-networking system 760 by a third-party through a "communication channel," such as a newsfeed or stream.

In particular examples, the social-networking system 760 may include a variety of servers, sub-systems, programs, modules, logs, and data stores. In particular examples, the social-networking system 760 may include one or more of the following: a web server, action logger, API-request server, relevance-and-ranking engine, content-object classifier, notification controller, action log, third-party-content-object-exposure log, inference module, authorization/privacy server, search module, advertisement-targeting module, user-interface module, user-profile store, connection store, third-party content store, or location store. The social-networking system 760 may also include suitable components such as network interfaces, security mechanisms, load balancers, failover servers, management-and-network-operations consoles, other suitable components, or any suitable combination thereof. In particular examples, the social-networking system 760 may include one or more user-profile stores for storing user profiles. A user profile may include, for example, biographic information, demographic information, behavioral information, social information, or other types of descriptive information, such as work experience, educational history, hobbies or preferences, interests, affinities, or location. Interest information may include interests related to one or more categories. Categories may be general or specific. As an example and not by way of limitation, if a user "likes" an article about a brand of shoes the category may be the brand, or the general category of "shoes" or "clothing." A connection store may be used for storing connection information about users. The connection information may indicate users who have similar or common work experience, group memberships, hobbies, educational history, or are in any way related or share common attributes. The connection information may also include user-defined connections between different users and content (both internal and external). A web server may be used for linking the social-networking system 760 to one or more client systems 730 or one or more third-party systems 770 via a network 710. The web server may include a mail server or other messaging functionality for receiving and routing messages between the social-networking system 760 and one or more client systems 730. An API-request server may allow a third-party system 770 to access information from the social-networking system 760 by calling one or more APIs. An action logger may be used to receive communications from a web server about a user's actions on or off the social-networking system 760. In conjunction with the action log, a third-party-content-object log may be maintained of user exposures to third-party-content objects. A notification controller may provide information regarding content objects to a client system 730. Information may be pushed to a client system 730 as notifications, or information may be pulled from a client system 730 responsive to a request received from a client system 730. Authorization servers may be used to enforce one or more privacy settings of the users of the social-networking system 760. A privacy setting of a user determines how particular information associated with a user can be shared. The authorization server may allow users to opt in to or opt out of having their actions logged by the social-networking system 760 or shared with other systems (e.g., a third-party system 770), such as, for example, by setting appropriate privacy settings. Third-party-content-object stores may be used to store content objects received from third parties, such as a third-party system 770. Location stores may be used for storing location information received from client systems 730 associated with users. Advertisement-pricing modules may combine social information, the current time, location information, or other suitable information to provide relevant advertisements, in the form of notifications, to a user.

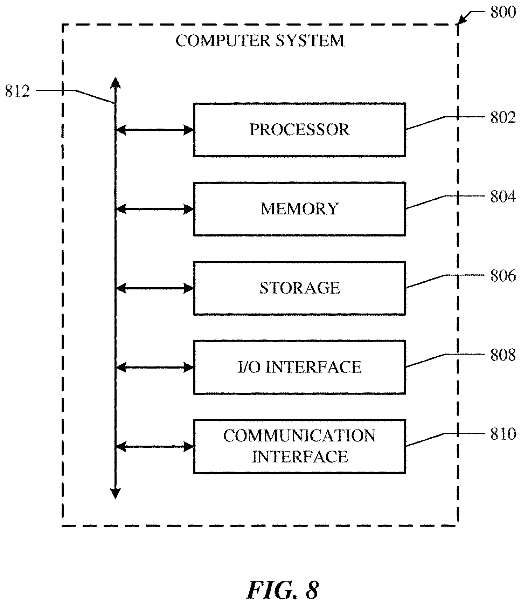

**FIG. 8** illustrates an example computer system 800. In particular examples, one or more computer systems 800 perform one or more steps of one or more methods described or illustrated herein. In particular examples, one or more computer systems 800 provide functionality described or illustrated herein. In particular examples, software running on one or more computer systems 800 performs one or more steps of one or more methods described or illustrated herein or provides functionality described or illustrated herein. Particular examples include one or more portions of one or more computer systems 800. Herein, reference to a computer system may encompass a computing device, and vice versa, where appropriate. Moreover, reference to a computer system may encompass one or more computer systems, where appropriate.

This disclosure contemplates any suitable number of computer systems 800. This disclosure contemplates computer system 800 taking any suitable physical form. As example and not by way of limitation, computer system 800 may be an embedded computer system, a system-on-chip (SOC), a single-board computer system (SBC) (such as, for example, a computer-on-module (COM) or system-on-module (SOM)), a desktop computer system, a laptop or notebook computer system, an interactive kiosk, a mainframe, a mesh of computer systems, a mobile telephone, a personal digital assistant (PDA), a server, a tablet computer system, an augmented/virtual reality device, or a combination of two or more of these. Where appropriate, computer system 800 may include one or more computer systems 800; be unitary or distributed; span multiple locations; span multiple machines; span multiple data centers; or reside in a cloud, which may include one or more cloud components in one or more networks. Where appropriate, one or more computer systems 800 may perform without substantial spatial or temporal limitation one or more steps of one or more methods described or illustrated herein. As an example and not by way of limitation, one or more computer systems 800 may perform in real time or in batch mode one or more steps of one or more methods described or illustrated herein. One or more computer systems 800 may perform at different times or at different locations one or more steps of one or more methods described or illustrated herein, where appropriate.

In particular examples, computer system 800 includes a processor 802, memory 804, storage 806, an input/output (I/O) interface 808, a communication interface 810, and a bus 812. Although this disclosure describes and illustrates a particular computer system having a particular number of particular components in a particular arrangement, this disclosure contemplates any suitable computer system having any suitable number of any suitable components in any suitable arrangement.

In particular examples, processor 802 includes hardware for executing instructions, such as those making up a computer program. As an example and not by way of limitation, to execute instructions, processor 802 may retrieve (or fetch) the instructions from an internal register, an internal cache, memory 804, or storage 806; decode and execute them; and then write one or more results to an internal register, an internal cache, memory 804, or storage 806. In particular examples, processor 802 may include one or more internal caches for data, instructions, or addresses. This disclosure contemplates processor 802 including any suitable number of any suitable internal caches, where appropriate. As an example and not by way of limitation, processor 802 may include one or more instruction caches, one or more data caches, and one or more translation lookaside buffers (TLBs). Instructions in the instruction caches may be copies of instructions in memory 804 or storage 806, and the instruction caches may speed up retrieval of those instructions by processor 802. Data in the data caches may be copies of data in memory 804 or storage 806 for instructions executing at processor 802 to operate on; the results of previous instructions executed at processor 802 for access by subsequent instructions executing at processor 802 or for writing to memory 804 or storage 806; or other suitable data. The data caches may speed up read or write operations by processor 802. The TLBs may speed up virtual-address translation for processor 802. In particular examples, processor 802 may include one or more internal registers for data, instructions, or addresses. This disclosure contemplates processor 802 including any suitable number of any suitable internal registers, where appropriate. Where appropriate, processor 802 may include one or more arithmetic logic units (ALUs); be a multi-core processor; or include one or more processors 802. Although this disclosure describes and illustrates a particular processor, this disclosure contemplates any suitable processor.

In particular examples, memory 804 includes main memory for storing instructions for processor 802 to execute or data for processor 802 to operate on. As an example and not by way of limitation, computer system 800 may load instructions from storage 806 or another source (such as, for example, another computer system 800) to memory 804. Processor 802 may then load the instructions from memory 804 to an internal register or internal cache. To execute the instructions, processor 802 may retrieve the instructions from the internal register or internal cache and decode them. During or after execution of the instructions, processor 802 may write one or more results (which may be intermediate or final results) to the internal register or internal cache. Processor 802 may then write one or more of those results to memory 804. In particular examples, processor 802 executes only instructions in one or more internal registers or internal caches or in memory 804 (as opposed to storage 806 or elsewhere) and operates only on data in one or more internal registers or internal caches or in memory 804 (as opposed to storage 806 or elsewhere). One or more memory buses (which may each include an address bus and a data bus) may couple processor 802 to memory 804. Bus 812 may include one or more memory buses, as described below. In particular examples, one or more memory management units (MMUs) reside between processor 802 and memory 804 and facilitate accesses to memory 804 requested by processor 802. In particular examples, memory 804 includes random access memory (RAM). This RAM may be volatile memory, where appropriate. Where appropriate, this RAM may be dynamic RAM (DRAM) or static RAM (SRAM). Moreover, where appropriate, this RAM may be single-ported or multi-ported RAM. This disclosure contemplates any suitable RAM. Memory 804 may include one or more memories 804, where appropriate. Although this disclosure describes and illustrates particular memory, this disclosure contemplates any suitable memory.

In particular examples, storage 806 includes mass storage for data or instructions. As an example and not by way of limitation, storage 806 may include a hard disk drive (HDD), solid-state drive (SSD), a floppy disk drive, flash memory, an optical disc, a magneto-optical disc, magnetic tape, or a Universal Serial Bus (USB) drive or a combination of two or more of these. Storage 806 may include removable or non-removable (or fixed) media, where appropriate. Storage 806 may be internal or external to computer system 800, where appropriate. In particular examples, storage 806 is non-volatile, solid-state memory. In particular examples, storage 806 includes read-only memory (ROM). Where appropriate, this ROM may be mask-programmed ROM, programmable ROM (PROM), erasable PROM (EPROM), electrically erasable PROM (EEPROM), electrically alterable ROM (EAROM), or flash memory or a combination of two or more of these. This disclosure contemplates mass storage 806 taking any suitable physical form. Storage 806 may include one or more storage control units facilitating communication between processor 802 and storage 806, where appropriate. Where appropriate, storage 806 may include one or more storages 806. Although this disclosure describes and illustrates particular storage, this disclosure contemplates any suitable storage.

In particular examples, I/O interface 808 includes hardware, software, or both, providing one or more interfaces for communication between computer system 800 and one or more I/O devices. Computer system 800 may include one or more of these I/O devices, where appropriate. One or more of these I/O devices may enable communication between a person and computer system 800. As an example and not by way of limitation, an I/O device may include a keyboard, keypad, microphone, monitor, mouse, printer, scanner, speaker, still camera, stylus, tablet, touch screen, trackball, video camera, another suitable I/O device or a combination of two or more of these. An I/O device may include one or more sensors. This disclosure contemplates any suitable I/O devices and any suitable I/O interfaces 808 for them. Where appropriate, I/O interface 808 may include one or more device or software drivers enabling processor 802 to drive one or more of these I/O devices. I/O interface 808 may include one or more I/O interfaces 808, where appropriate. In particular examples, the I/O devices may include one or more of a virtual element, such as a virtual reality keyboard. The I/O devices may be configured to receive one or more of an input, such as a voice input, a gesture input, and the like. Although this disclosure describes and illustrates a particular I/O interface, this disclosure contemplates any suitable I/O interface.

In particular examples, communication interface 810 includes hardware, software, or both providing one or more interfaces for communication (such as, for example, packet-based communication) between computer system 800 and one or more other computer systems 800 or one or more networks. As an example and not by way of limitation, communication interface 810 may include a network interface controller (NIC) or network adapter for communicating with an Ethernet or other wire-based network or a wireless NIC (WNIC) or wireless adapter for communicating with a wireless network, such as a WI-FI network. This disclosure contemplates any suitable network and any suitable communication interface 810 for it. As an example and not by way of limitation, computer system 800 may communicate with an ad hoc network, a personal area network (PAN), a local area network (LAN), a wide area network (WAN), a metropolitan area network (MAN), or one or more portions of the Internet or a combination of two or more of these. One or more portions of one or more of these networks may be wired or wireless. As an example, computer system 800 may communicate with a wireless PAN (WPAN) (such as, for example, a BLUETOOTH WPAN), a WI-FI network, a WI-MAX network, a cellular telephone network (such as, for example, a Global System for Mobile Communications (GSM) network), or other suitable wireless network or a combination of two or more of these. Computer system 800 may include any suitable communication interface 810 for any of these networks, where appropriate. Communication interface 810 may include one or more communication interfaces 810, where appropriate. Although this disclosure describes and illustrates a particular communication interface, this disclosure contemplates any suitable communication interface.

In particular examples, bus 812 includes hardware, software, or both coupling components of computer system 800 to each other. As an example and not by way of limitation, bus 812 may include an Accelerated Graphics Port (AGP) or other graphics bus, an Enhanced Industry Standard Architecture (EISA) bus, a front-side bus (FSB), a HYPERTRANSPORT (HT) interconnect, an Industry Standard Architecture (ISA) bus, an INFINIBAND interconnect, a low-pin-count (LPC) bus, a memory bus, a Micro Channel Architecture (MCA) bus, a Peripheral Component Interconnect (PCI) bus, a PCI-Express (PCIe) bus, a serial advanced technology attachment (SATA) bus, a Video Electronics Standards Association local (VLB) bus, or another suitable bus or a combination of two or more of these. Bus 812 may include one or more buses812, where appropriate. Although this disclosure describes and illustrates a particular bus, this disclosure contemplates any suitable bus or interconnect.

Herein, a computer-readable non-transitory storage medium or media may include one or more semiconductor-based or other integrated circuits (ICs) (such, as for example, field-programmable gate arrays (FPGAs) or application-specific ICs (ASICs)), hard disk drives (HDDs), hybrid hard drives (HHDs), optical discs, optical disc drives (ODDs), magneto-optical discs, magneto-optical drives, floppy diskettes, floppy disk drives (FDDs), magnetic tapes, solid-state drives (SSDs), RAM-drives, SECURE DIGITAL cards or drives, any other suitable computer-readable non-transitory storage media, or any suitable combination of two or more of these, where appropriate. A computer-readable non-transitory storage medium may be volatile, non-volatile, or a combination of volatile and non-volatile, where appropriate.

Herein, "or" is inclusive and not exclusive, unless expressly indicated otherwise or indicated otherwise by context. Therefore, herein, "A or B" means "A, B, or both," unless expressly indicated otherwise or indicated otherwise by context. Moreover, "and" is both joint and several, unless expressly indicated otherwise or indicated otherwise by context. Therefore, herein, "A and B" means "A and B, jointly or severally," unless expressly indicated otherwise or indicated otherwise by context.

The scope of this disclosure encompasses all changes, substitutions, variations, alterations, and modifications to the examples described or illustrated herein that a person having ordinary skill in the art would comprehend. The scope of this disclosure is not limited to the examples described or illustrated herein. Moreover, although this disclosure describes and illustrates respective examples herein as including particular components, elements, feature, functions, operations, or steps, any of these examples may include any combination or permutation of any of the components, elements, features, functions, operations, or steps described or illustrated anywhere herein that a person having ordinary skill in the art would comprehend. Furthermore, reference in the appended claims to an apparatus or system or a component of an apparatus or system being adapted to, arranged to, capable of, configured to, enabled to, operable to, or operative to perform a particular function encompasses that apparatus, system, component, whether or not it or that particular function is activated, turned on, or unlocked, as long as that apparatus, system, or component is so adapted, arranged, capable, configured, enabled, operable, or operative. Additionally, although this disclosure describes or illustrates particular examples as providing particular advantages, particular examples may provide none, some, or all of these advantages.

## Claims

1. A method comprising, by a computing system:
determining a gaze of a user of the computing system;
generating a foveated map based on the gaze to determine a sensor readout for an image sensor of the computing system, wherein the foveated map comprises a plurality of foveal regions;
determining the sensor readout comprising a plurality of zones corresponding to the image sensor based on the plurality of foveal regions, and wherein each of the plurality of zones indicates a readout resolution for an area of the image sensor for the respective zone;
capturing a first image using the image sensor; and
generating a modified first image based on the captured first image and the sensor readout.

2. The method of claim 1, wherein the plurality of foveal regions comprises one or more of a central foveal region, a mid foveal region, or an outer foveal region;
preferably wherein the plurality of zones comprises one or more of a first zone corresponding to the central foveal region, a second zone corresponding to the mid foveal region, or a third zone corresponding to the outer foveal region.

3. The method of claim 1 or 2, wherein each of the plurality of zones further indicates a field-of-view (FOV) for the image sensor for the respective zone.

4. The method of any preceding claim, wherein a first zone of the plurality of zones indicates a first readout resolution for a first area of the image sensor and a second zone of the plurality of zones indicates a second readout resolution of a second area of the image sensor, and wherein the first readout resolution is a higher resolution than the second readout resolution; preferably wherein the first area overlaps the second area.

5. The method of any preceding claim, further comprising:
blending, using an image signal processor of the computing system, a first sensor readout corresponding to a first zone of the plurality of zones and a second sensor readout corresponding to a second zone of the plurality of zones;
preferably further comprising:
omitting one or more areas corresponding to one or more zones of the plurality of zones to be readout in the sensor readout.

6. The method of any preceding claim, wherein a first zone of the plurality of zones is associated with a first frame rate and a second zone of the plurality of zones is associated with a second frame rate.

7. The method of any preceding claim, further comprising:
determining an updated gaze of the user of the computing system; and
generating an updated foveated map based on the updated gaze, wherein the updated foveated map comprises a plurality of updated foveal regions;
preferably further comprising:
determining an updated sensor readout comprising a plurality of updated zones corresponding to the image sensor based on the plurality of updated foveal regions;
capturing a second image using the image sensor; and
generating a modified second image based on the captured second image and the updated sensor readout.

8. The method of any preceding claim, further comprising:
performing, using an image signal processor of the computing system, noise reduction, wherein a first noise reduction algorithm is used for a first zone of the plurality of zones and a second noise reduction algorithm is used for a second zone of the plurality of zones.

9. The method of any preceding claim, further comprising:
performing depth processing using a depth map of a scene captured by the first image to determine a mapping; and
warping a first sensor readout corresponding to a first zone of the plurality of zones based on the mapping;
preferably further comprising:
determining an inpainting algorithm based on a zone of the plurality of zones; and
performing a first inpainting algorithm on the warped first sensor readout based on the first zone.

10. The method of any preceding claim, further comprising:
rendering one or more virtual objects in the modified first image based on the sensor readout.

11. The method of any preceding claim, wherein the modified first image comprises a first image section corresponding to a first sensor readout of a first zone of the plurality of zones, a second image section corresponding to a second sensor readout of a second zone of the plurality of zones, and a third image section corresponding to a third sensor readout of a third zone of the plurality of zones;
preferably further comprising:
applying one or more super-resolution techniques to make the readout resolution of each zone of the plurality of zones equal.

12. The method of any preceding claim, further comprising:
adjusting a brightness level of the modified first image based on the foveated map.

13. One or more computer-readable storage media embodying software that is operable when executed to carry out the method of any preceding claim.

14. A system comprising:
one or more processors; and
one or more computer-readable storage media coupled to one or more of the processors and comprising instructions operable when executed by one or more of the processors to cause the system to carry out the method of any of claims 1 to 12.

15. A computer program product comprising instructions which, when the program is executed by a computer, cause the computer to carry out the method of any of claims 1 to 12.
